# EUROPEAN PATENT SPECIFICATION

(11) **EP 1 032 185 B1**
(45) Date of publication and mention of the grant of the patent: **12.09.2007**
(21) Application number: 00301344.8
(22) Date of filing: 21.02.2000
(51) Int. Cl.: G06F 17/30, H04L 29/08, G06F 17/21

(54) **Improved display of content in handheld wireless devices**
Verbesserte Anzeige von Inhalt in tragbaren Funkgeräten
Affichage de contenus amélioré dans des dispositifs portables sans fil

(30) Priority: 22.02.1999 GB 9903947
(43) Date of publication of application: 30.08.2000
(60) Divisional application: 07075624.2
(73) Proprietor: Nokia Corporation, 02150 Espoo (FI)
(72) Inventor: Pukkila, Paivi, 90460 Oulunsalo (FI); With, Mikko, 90460 Oulunsalo (FI); Heikkila, Kari, 33820 Tampere (FI)
(74) Representative: Ruuskanen, Juha-Pekka

(56) References cited:
- EP-A- 0 779 759
- EP-A- 1 071 024
- WO-A-00/39666
- UP SDK DOCUMENTATION: "HDML 2.0 Language Reference Version 2.0" HDML 2.0 LANGUAGE REFERENCE, UNWIRED PLANET, INC. REDWOOD SHORES, CA, US, July 1997 (1997-07), pages 1-56, XP002114153
- TOMISHA KAMADA ET AL: "Compact HTML for Small Information Appliances" INTERNET CITATION, 9 February 1998 (1998-02-09), XP002114152 Retrieved from the Internet: <URL:http://www.w3.org/TR/1998/NOTE-compac tHTML-19980209> [retrieved on 1999-09-02]

## Description

The present invention relates to the user interface of a handset. In particular, it relates to the control of the operation of a display of such a device.

The displays of hand portable devices, such as radio communication devices present severe constrains on the amount of information that can usefully be presented to the user at any one time. These constraints have become increasingly problematic as users demand ever more information at their fingertips.

EP-A-0779759 discloses a method and architecture for an interactive two-way data communication network. A method of interpreting and displaying information using a structured user interface is described.

UP SDK Documentation: 'HDML 2.0 Language Reference Version 2.0' HDML 2.0 Language Reference, Unwired Planet, Inc. Redwood Shores, CA, US, July 1997 (1997-07), pages 1-56, XP002114153 describes a handheld device markup language (HDML), a language developed to interactively display information on small handheld devices.

According to one aspect of the present invention there is provided a radio handset comprising: a user interface including an input means, a display means, and a selection means coupled to the input means for selecting an item from a plurality of items which are presented on the display means, said items comprising at least static items not allowing user's input of content therein and reactive items allowing user's input of content therein, wherein at least a static item is associated to a reactive item; and a radio receiver adapted to receive information specifying a set of static items and their associated reactive items, said further indicating that said static items and said associated reactive items are to be displayed simultaneously; said radio handset characterised in that it further comprises: reformatting means coupled to the radio and adapted to extract the specified set of static items and associated reactive items from said received information, said reformatting means further adapted to generate a set of link items from the extracted set of static items and associated reactive items, each link item defining a link between a static item and its associated reactive item; control means coupled to the selection means and to the reformatting means for controlling operation of the display means, said control means adapted to provide a simultaneous displaying of the static items together with their corresponding link items but without their associated reactive items, and also to detect that one of said link items has been selected by the selection means; and further to replace the current displaying by a different one presenting the reactive item associated to said selected link item.

Such a radio handset has improved user operability for a number of reasons. For example, the separation of the static and reactive items results in the user obtaining an overview of the service or information content available to him. He can then select the static item in which he wishes to delve into more detail, to link to the reactive item that provides such further detail.

Consequently, improved flexibility of manipulation of the information by the user is provided.

From a manufacturer/service provider's perspective, the separation and linking of static and reactive items improves the choice of user interface approaches available to them.

On particular benefit for both groups is the fact that consistent user interface be used irrespective of the mode of operation of a device. For example, a radio handset may operate as a radiotelephone, and/or a user agent such as a browser. A user familiar with the menu structure of a manufacturer's radiotelephone will not need to learn a new structure in order to operate that manufacturers browser device.

According to another aspect of the present invention there is provided a method of controlling the displaying of a radio handset which comprises a user interface including an input means, a display means, and selection means coupled to the input means for selecting an item from a plurality of items which are presented on the display means, said items comprising at least static items not allowing user's input of content therein and reactive items allowing user's input of content therein, wherein at least a static item is associated to a reactive item; and said method comprising the step of: (a) receiving information specifying at least a set of static items and their associated reactive items, said information further indicating that said static items and said associated reactive items are to be displayed simultaneously; and said method characterised in the following steps: (b) extracting the specified set of static items and associated reactive items from said received information; and (c) generating a set of link items from the extracted set of static items and associated reactive items, each link item defining a link between a static item and its associated reactive item; and (d) simultaneously displaying said static items together with their corresponding link items but without their associated reactive items; and (e) detecting that one of said link items has been selected by the selection means; and (f) replacing the current display by a different one presenting the reactive item associated to said selected link item.

Embodiments of the present invention will now be described, by way of example, with reference to the accompanying drawings, of which:
Figure 1 illustrates a radio handset according to an embodiment of the present invention;
Figure 2 illustrates parts of the radio handset of Figure 1;
Figures 3 and 4 illustrate alternative handsets to that shown in Figure 1;
Figure 5(a) illustrates how information may be presented on a large display, such as a desktop PC monitor;
Figure 5(b) illustrates the information shown in Figure 5(a) as a list;
Figure 5(c) illustrates how the information shown in Figure 5(a) may be structured for display on a radio handset, according to a preferred embodiment of the present invention;
Figure 6 illustrates how various terms in reduced format may be shown in their full or expanded format according to a preferred embodiment of the present invention;
Figures 7 and 8 illustrate examples of wireless markup language (WML), which a radio handset of the invention may receive from a network, for example, and a preferred resultant user interface;
Figures 9 and 10 relate to the browser of a radio handset, and exemplify its user interface for different services received from the network;
Figure 11 shows how the display of the device of Figure 1 may be divided into regions for displaying different types of information;
Figure 12 (a) illustrates WML received by a radio handset from the network;
Figure 12 (b) illustrates a preferred resultant user interface; and
Figure 12 (c) is a flow diagram illustrating the interpretation of the received WML shown in Figure 12 (a) by the radio handset, to arrive at the user interface of Figure 12 (b).

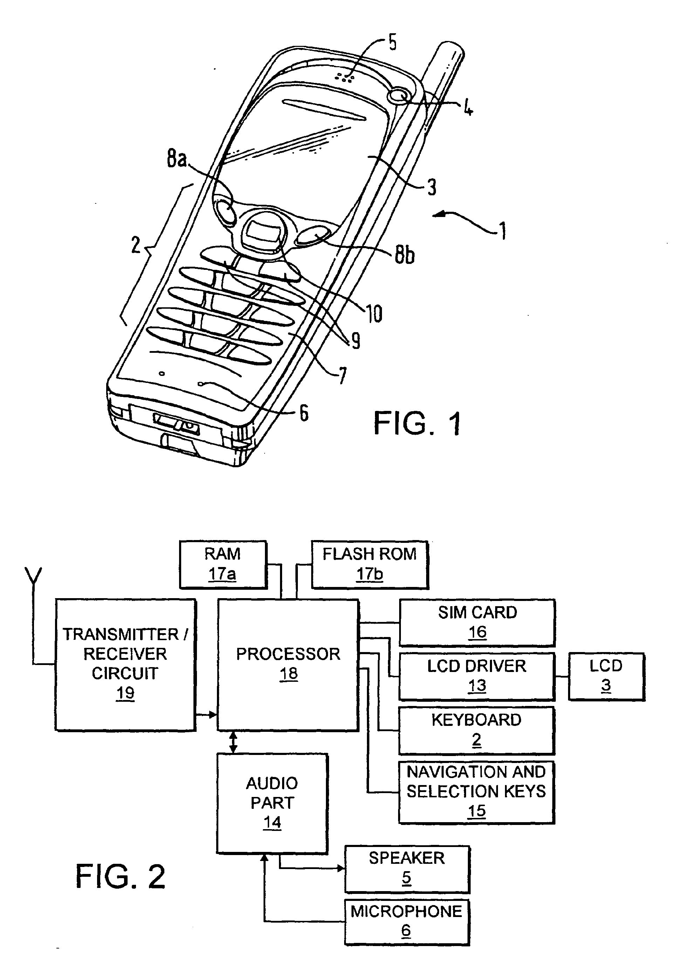

Figure 1 shows a preferred embodiment of a radio handset, according to the present invention. The handset, which is generally designated by 1, comprises a user interface having a keypad 2, a display 3, an on/off button 4, a speaker 5, and a microphone 6. The handset 1 according to the preferred embodiment is adapted for communication via a wireless telecommunication network, e.g. a cellular network. However, the handset could also have been designed for a cordless network. The keypad 2 has a first group 7 of keys as alphanumeric keys, by means of which the user can enter a telephone number, write a text message (SMS), write a name (associated with the phone number), etc. Each of the twelve alphanumeric keys 7 is provided with a figure "0-9" or a sign "#" or "*", respectively. In alpha mode each key is associated with a number of letters and special signs used in text editing. The keypad 2 additionally comprises two soft keys 8, two call handling keys 9, and a navigation key 10.

The two soft keys 8 have functionality corresponding to what is known from the handsets Nokia 2110^{™}, and Nokia 8110^{™}. The functionality of the soft key depends on the state of the handset and the navigation in the menu by using a navigation key. The present functionality of the soft keys 8a and 8b is shown in separate fields in the display 3 just above the keys 8.

The two call handling keys 9 according to the preferred embodiment are used for establishing a call or a conference call, terminating a call or rejecting an incoming call.

The navigation key 10 is an up/down key and is placed centrally on the front surface of the handset between the display 3 and the group of alphanumeric keys 7. Hereby the user will be able to control this key by simply pressing the up/down key using his/her thumb. Since many experienced handset users are used to one-hand control, it is a very good solution to place an input key, requiring precise motor movements. Thus, the user may place the handset in the hand between the finger tips and the palm of the hand. Hereby, the thumb is free for inputting information.

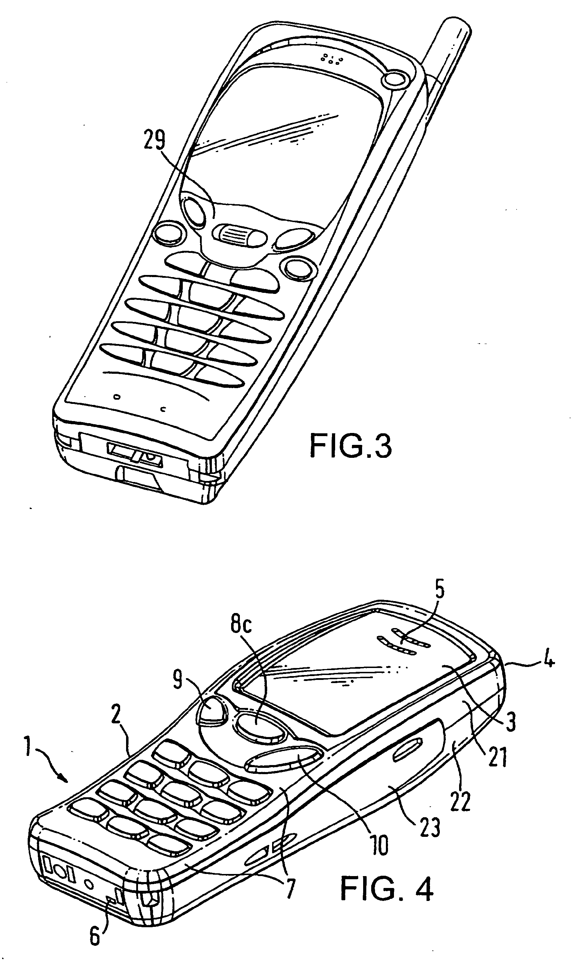

Figures 3 and 4 illustrate alternative handsets to that in Figure 1. The handset of Figure 3 differs in that the navigation key is a roller key. The roller key can be rolled for navigation and pressed for selection, and assists speedy movement through display pages. The handset of Figure 4 differs in that it has a single soft key 8c and no dedicated call handling keys 9. The single softkey operates as in the Nokia 3110^{™}.

Figure 2 is a block diagram of the most important parts of a preferred embodiment of the handset. These parts being essential to understand the invention. The preferred embodiment of the handset of the invention is adapted for use in connection with a GSM network, but, of course, the invention may also be applied in connection with other handset networks, such as other kinds of cellular networks and various forms of cordless handset systems or in dual band handsets accessing sets of these systems/networks. The microphone 6 records the user's speech, and the analogue signals formed thereby are A/D converted in an A/D converter (not shown) before the speech is encoded in an audio part 14. The encoded speech signal is transferred to control means 18. The control means 18 comprises a processor, which may support software in the handset. The control means 18 also forms the interface to the peripheral units of the apparatus, wherein the peripheral units can comprise a RAM memory 17a and a Flash ROM memory 17b, a SIM card 16, the display 3 and the keypad 2 (as well as data, power supply, etc.). The control means 18 communicates with a transmitter/receiver means 19, e.g. a circuit which is adopted to send/receive a request/respond to/from a telecommunication network. The audio part 14 speech-decodes the signal, which is transferred from the control means 18 to the earpiece 5 via a D/A converter (not shown).

The control means 18 is connected to the user interface. Thus, it is the control means 18 which monitors the activity in the handset and controls the display 3 in response thereto. Therefore, it is the control means 18 which detects the occurrence of a state change event and changes the state of the handset and thus the display text. A state change event may be caused by the user when he activates the keypad including the navigation key 10, and these type of events are called entry events or user events. However, the network communicating with the handset may also cause a state change event. This type of event and other events beyond the user's control are called non user events. Non user events comprise status change during call set-up, change in battery voltage, change in antenna conditions, message on reception of SMS, etc.

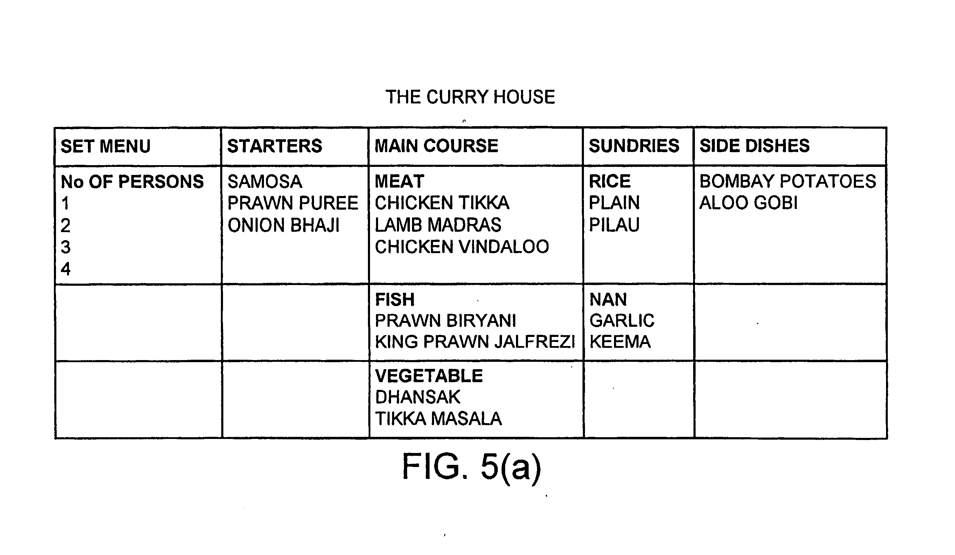

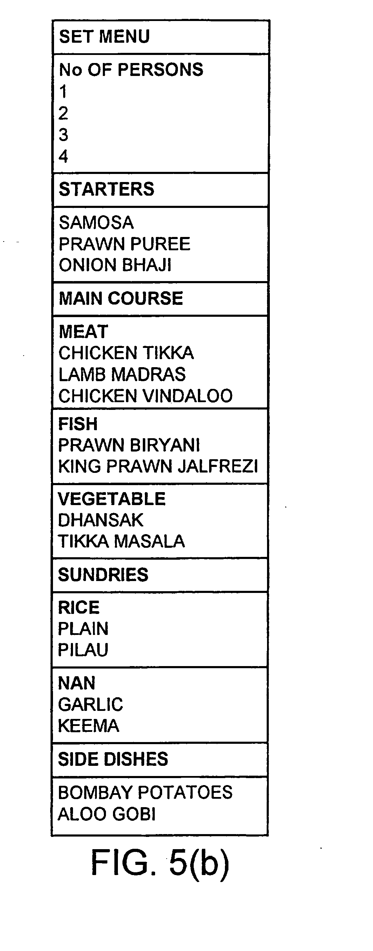

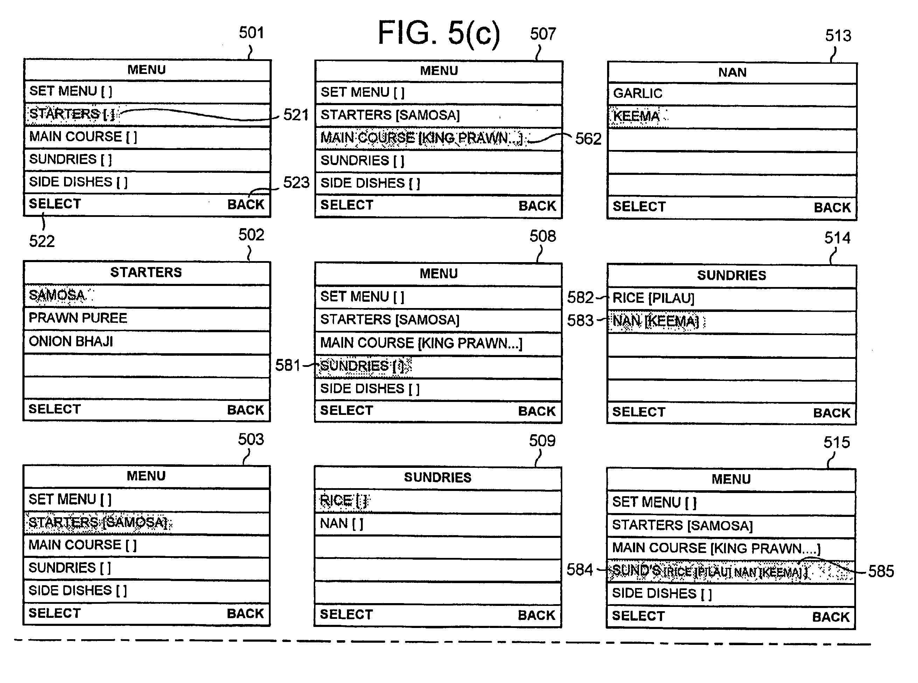

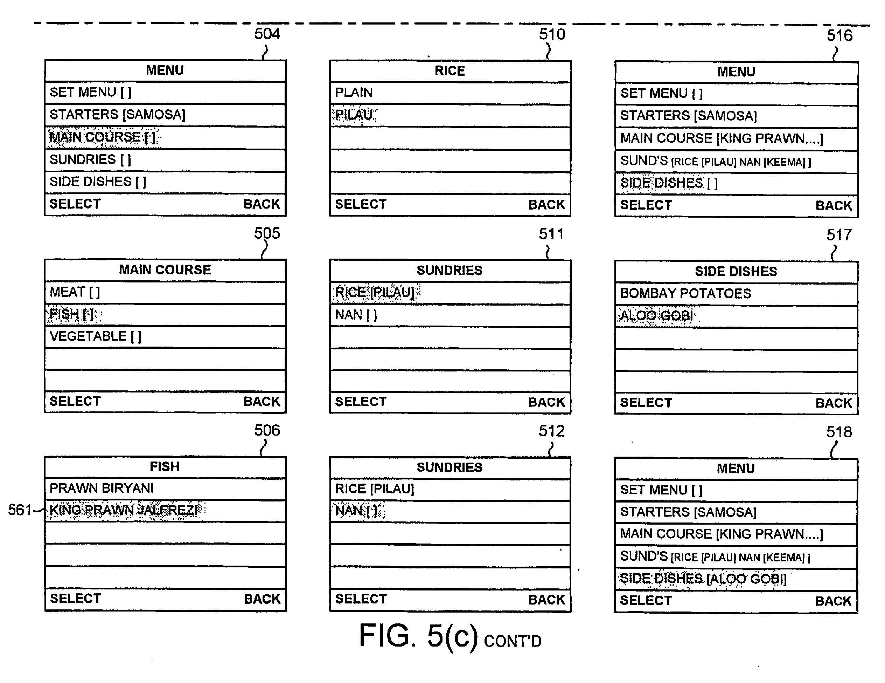

Figure 5 illustrates the menu of a curry house. This menu could have been stored in memory 17a of the handset by the user (for example in the format shown in figure 5b). Alternatively, it could be provided by a restaurant as an Internet service. A typical Internet service might have a page looking like figure 5a on a conventional desktop PC monitor.

The format shown in figure 5b is not suitable for a handset display which may typically have six lines for text, as it would require a large amount of scrolling by the user in order for him to see all the options available. Moreover, he would need to scroll through all the options of a certain meal type before arriving at a meal type that he desires. For example, if he only wishes to look at the main course and sundries, he would need to scroll through the set menu type and set menu options and the starters and starter options before reaching the main course options.

Figure 5c, on the other hand, illustrates a preferred display menu arrangement according to an embodiment of the present invention.

The content which may appear on a display can be divided into two types, static items (e.g. plain text) and react-to or reactive items (e.g. input elements, select elements). In figure 5a, the static and reactive items are shown together on the display. The headings set menu, starters, main course, sundries and side dishes are static items, and the selection lists under those headings e.g. Samosa, Prawn Puree, Onion Bhaji under the heading starters, are react-to items.

In the embodiment of the invention shown in figure 5c, however, rather than display both static and react-to items together, the react-to items are each given a static instance on the display, which links to the corresponding react-to item. For example, static instances can be identified by the user in this embodiment by the presence of square brackets [ ] on the display. Looking at display pages 501 and 502, display page 501 comprises a static instance 521 "starters [ ]" which links to a starters selection list on the starter page 502. The menu page 501 may be replaced by the starters page 502 when the user selects the "select function 522" by actuating the corresponding softkey (for example the softkey 8a of the handset shown in figure 1).

As can be seen from figure 5c, the user gets to see all the meal types available on the menu on a single display page, without having to scroll through all the selection lists first (display page 501). This has the advantage of him being able to have a clear overview of the possible meal type options and also enables him to skip options not of interest to him (for example the set menu options in this case).

In this embodiment, the user has selected the starters static instance "starters [ ]" 521 by moving the cursor to that option and pressing the select softkey. Hence, the handsets processor 18 causes the display to show a new display page, namely the linked starters page 502. The user then scrolls through the options (for example using scroll key 10 in the handset of figure 1) and presses the select softkey when the starter he desires is highlighted. The display then reverts to showing the main menu page, but with an indication of the starter choice selected (display page 503). This may occur automatically upon selection or in response to the user selecting the back function 523 by actuating the associated right softkey 8b.

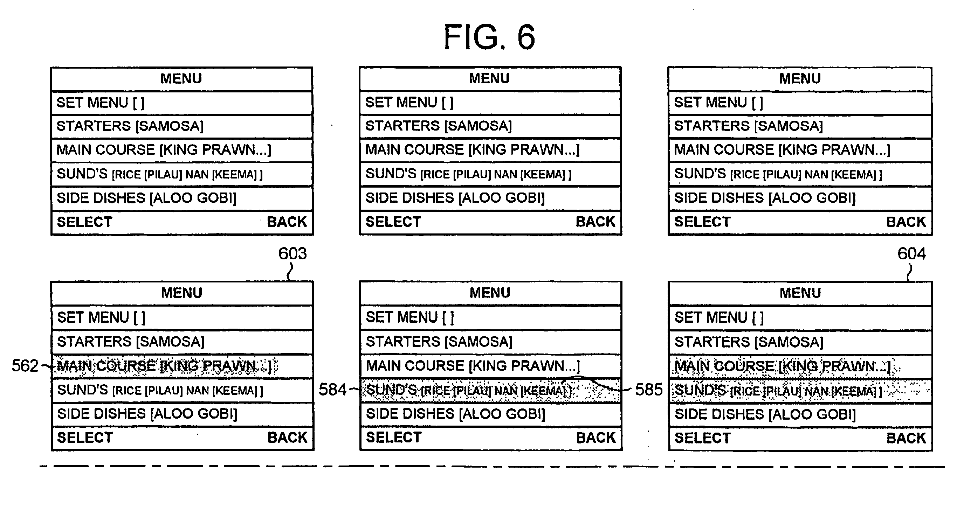

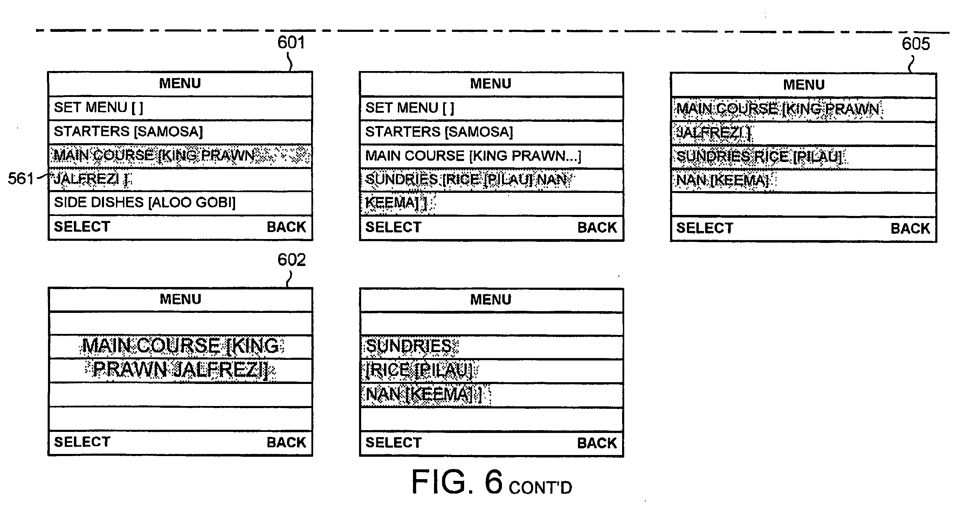

The user then selects the next meal type he desires: in this case a main course. The static instance "main course [] is highlighted and upon selection, the processor controls the display to show the linked page, namely the main course page 505. In order to enable the user to make a selection quickly and with the minimum amount of scrolling, this main course page 505 displays further static instances corresponding to main courses of certain types, namely meat fish and vegetables. In this case, the user has highlighted the fish option, thus eliminating the need to plough through the meat and vegetable dishes unless he so desires. In this example, King Prawn Jalfrezi is selected (from display page 506) and the display reverts back to show the menu page 507, now with starter and main course options indicated. Due to the small size of the display, and the number of meal types available, no extra lines are available on this handset display for new text. Hence, as one display line is not long enough for the full text, the term King Prawn Jalfrezi has been truncated on line 562. In order to indicate this to the user, in this embodiment, the processor has included three dots in this reduced version. Further explanation of the reduction of the full text is given below, in particular with reference to figure 6. Next, the user selects sundries on the main menu page 508, and the display is operated to present the sundries page 509. Like the main course page, the sundries page comprises further static instances rice, [ ], nan [ ] which link to respective rice and nan selection lists (on display pages 510 and 513). The user in this example has selected from both lists as shown in the resultant sundries page 514 and the display reverts back to show the main menu page 515. As can be seen from this page, there is again no available display page to show all the sundries choices in full. Hence, a reduced version is shown. However, contrary to the reduced version of the main course 562, the text is not truncated this time. Instead, the term sundries has been contracted by an elision and displayed as "sund's" 584 and the rice and nan selections 582 and 583 have been displayed in reduced size font 585.

Next, the user selects his desired side dish in the same manner (via display pages 516 and 517) and his selection is finally complete as shown in the filled in menu page 518. If appropriate, by selecting the back function, the user may be able to go to another page in which he can order his selection over the Internet.

Figure 6 illustrates different examples of how the terms 561 and 581-583, which are shown in reduced format 562, 584, 585 in figure 5c may be shown in their full format.

Figure 6a illustrates how the term main course [King Prawn Jalfrezi] may be shown in full format on the handset display. Firstly, the term is selected by the user, in this case by moving the cursor to the term shown in its reduced format. The processor may control operation of the display so that the full format of the item is shown if the cursor remains on the corresponding reduced format for a period (for example 3.5 seconds) or by the user actuating a specified key (e.g. star or hash). Likewise, the processor may cause the display to show the item in its full format until it receives a further user input, or it may cause the display to revert back to the previous page after a predetermined period.

Display pages 601 and 602 show alternative expanded formats. On display page 601, the expanded format obscures information relating to the sundries, but the other options remain in the view, whereas in display page 602, the previous page 603 is totally replaced by the full text main course [King Prawn Jalfrezi] which has also been increased in font size.

Figure 6b illustrates the same alternatives for the reduced format of the sundries selections.

Figure 6c illustrates another example, in which both the main course and sundries reduced format items are selected (display page 604) and their consequential expanded versions are displayed together on display page 605.

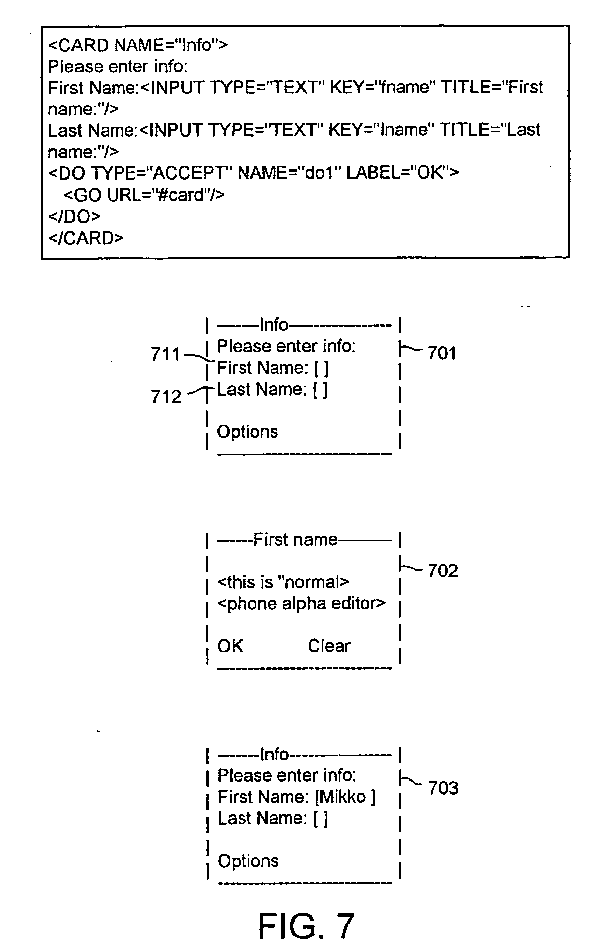

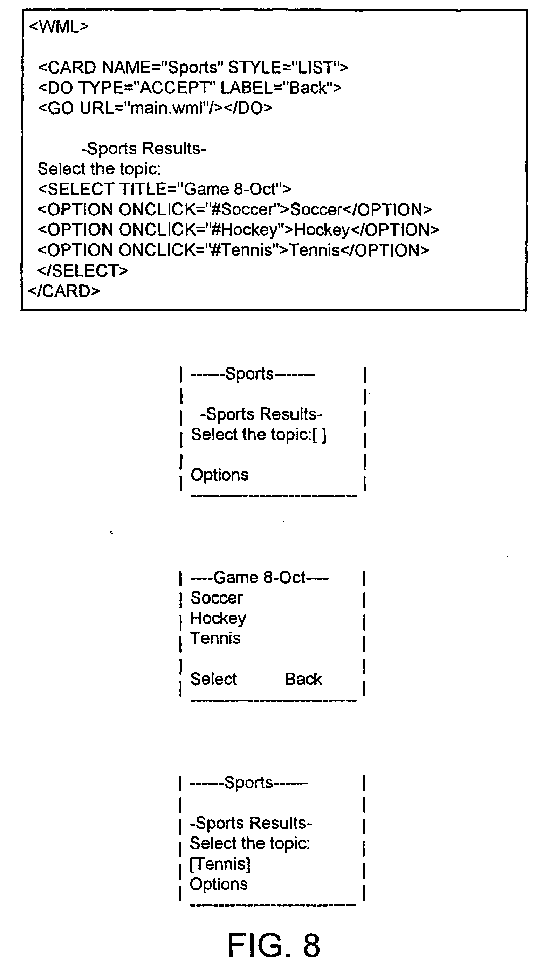

Figures 7 and 8 show further examples of the present invention, figure 7 showing react-to items in the form of an input list and figure 8 showing react-to items in the form of a selection list.

One way of accessing telecom related information services, such as the Internet, is the use the wireless application protocol (WAP). The wireless application protocol (WAP) is a result of continuing effort to define an industry wide standard for developing applications over wireless communication networks. WAP intends to use wireless mark up language (WML) to specify content and user interface for narrow band devices, including cellular phones and pagers. WML is a mark up language based on extensible mark up language (XML).

All information in WML is organised into a collection of cards and decks. Cards specify one or more units of user interaction. User navigates through a series of WML cards, reviews the contents of each, enters requested information, makes choices, and moves onto another card. The cards are grouped together into decks. A WML deck is similar to a hypertext mark up language page (HTML), in that it is identified by a URL and is the unit of content transmission.

Hence, the WML shown in figures 7 and 8 are examples of what a radio handset may receive from a radio network.

WML does not specify how the handsets processor is to control operation of its display so as to provide the information transmitted to the user. This is defined by the user agent (for example the radio handset processor). As can be seen from figure 7, the WML contains both static and react-to items on the card entitled info. When this WML is received by a handset of the present invention, these terms are separated and linked as appropriate.

For example, the display page 701 comprises static terms including static instances [ ] 711 and 712. These static instances are linked to corresponding react-to items. For example, the static instance 711 relating to the first name is linked to a first name display page 702 in which the user can add his name using the handset's data editor. As in the example of figure 6, once the user has edited his name he can select the OK softkey to return to the info page, in which he will be able to view the item input (see 703). In other words, the input fields are not embedded to content as in HTML/WWW but are presented as links [ ].

Figure 8 illustrates a selection list. It is arranged in a similar manner to that described with reference to figure 6, and will thus not be described further here..

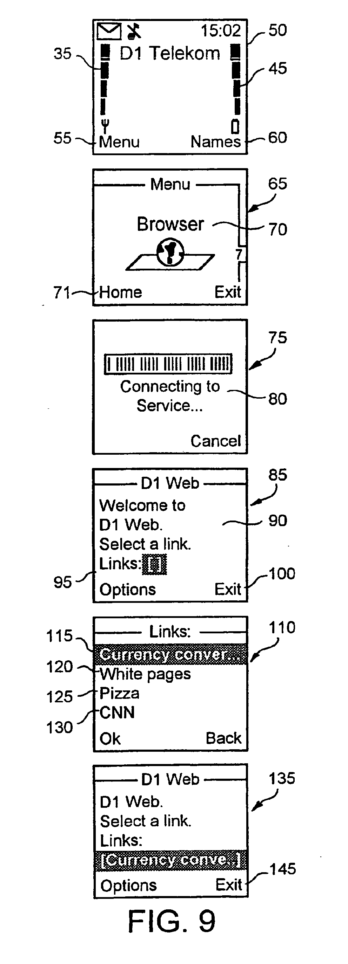

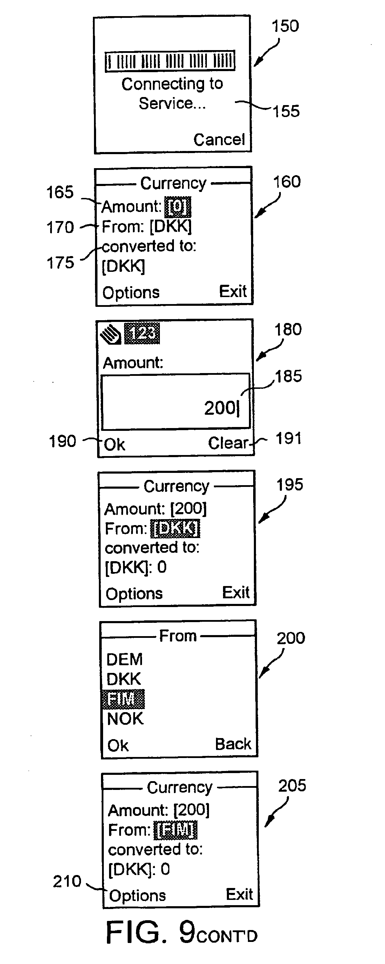

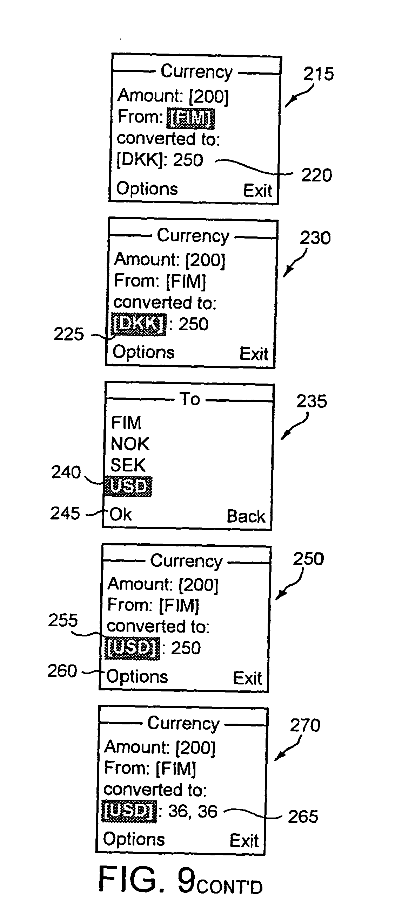

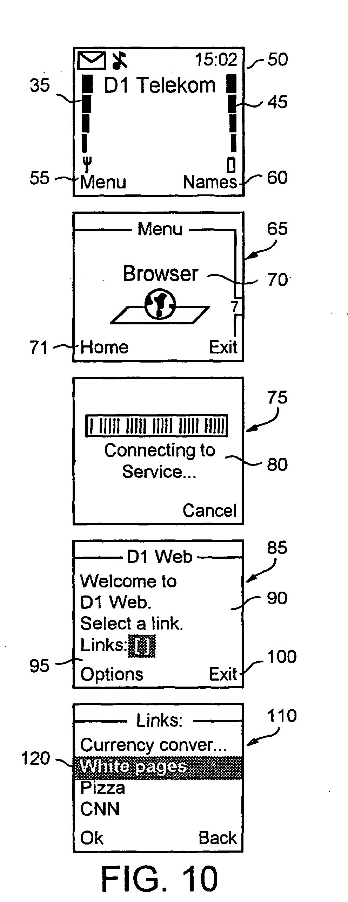

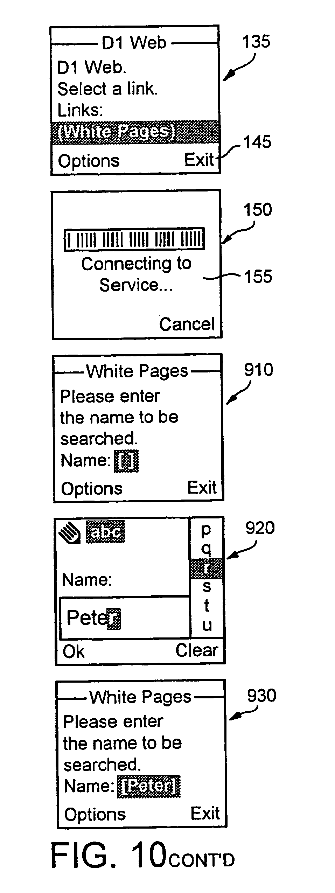

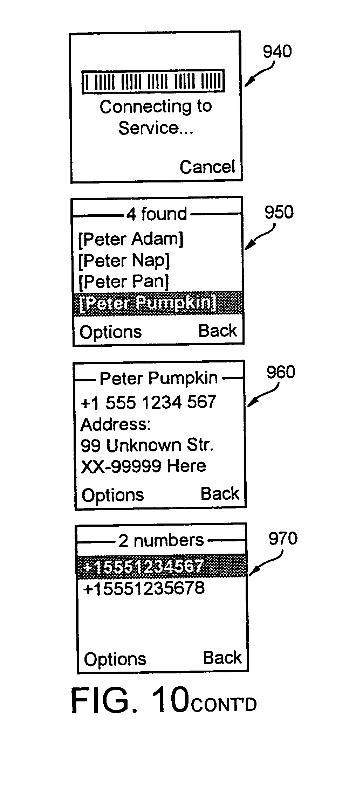

Figures 9 and 10 relate to the browser of a radio handset, and exemplify its user interface for currency conversion and white pages services respectively.

Turning first to figure 9, the user interface of the handset of this embodiment may comprise the same elements as shown in Figure 1, i.e. a keypad 2, a display 3, an on/off button 4, a speaker 5 and a microphone 6. Also, the control means 18 in Figure 2 may control the user interface. A display page 30 is presented on a handset display, as shown in Figure 1 and 2, which indicates signal strength 35 from the wireless telecommunication network "D1 Telekom" 40, the battery power 45 and a clock showing the time 50 in hours and minutes. Preferably, the display in the handset is an LCD (Liquid Crystal Display) display. The display can be controlled by the control means 18 as shown in Figure 2. The layout 30 presents an example of the handset in idle mode, i.e. when the handset is activated and awaiting an action, e.g. an incoming or outgoing call. At the bottom of the display, in specified softkey fields there are two items which are denoted as "Menu" 55 and "Names" 60. If the user selects "Names" 60 he can e.g. access a built in phonebook. If the user selects "Menu" 55, he can select from among several different menus. The actual selection of functions in the softkey fields, like "Menu" and "Names", can be selected by means of the associated soft keys such as those referenced 8a and b in Figure 1.

One of the menus can be the next page 65 called "Browser" 70. If the user chooses to use this menu, he/she can access different telecom related information services, e.g. Internet, using WAP.

If the user selects "Home" 71, this may lead to the next page 75, which graphically indicates, "Connecting to Service" 80. This shows that the handset is trying to establish a connection to e.g. Internet, by sending an access request to a server. If a connection is established, some kind of welcome text for a home page might be displayed, "Welcome to D1 Web." 90. If the user selects "Options" 100, a list of options can be displayed by the following display page 110. In this example, the different choices are "Currency converter" 115, "White pages" 120, Pizza" 125, "CNN" 130, etc, and the displayed items are static instances linked to reactive items. As in the Figure 5 embodiment, the full version "Currency Converter" is longer than the width of the active part of the display. Hence, the reduced version is displayed - a truncated version plus the aforementioned three dot indicator. If selected, the user could see the full text, for example in one of the manners shown in Figure 6. The user has selected to use the currency converter 115, and browses further to this application in the next page 135. A browser display is shown on this page with the selected item, which is indicated as a link to a service which provides a currency conversion. The user can select to send a request for the chosen item, by selecting the "Options" function 140.

This leads to the next page 150, which is the same as that shown with reference 75, which graphically indicates, "Connecting to Service" 155. If a connection is established, some kind of information text for the currency converter might be displayed. The page is provided with further static instances which link to various editable fields and selection lists. Again, the static instances are shown with square brackets [ ]. The selection which is highlighted can indicate a default state of the selection. The user can input an amount, "Amount:[ ]" 165, in one currency, "From:[DKK]" 170, converted into another currency, "converted to:[DKK]" 175, by linking to the pages showing the react to items (e.g. display pages 180, 200). Thereafter, the user may press Ok 190, or clear the amount by selecting "Clear" 191, to return back to the previous display page.

The steps for choosing a first currency to convert from 170, and choosing a second currency to convert to 175, are repeated in the pages 195-205. Thereafter, the user may select "Options" 210, in page 205, which in this example activates the calculation of the currency conversion and displays the result 220 in the next page 215.

If the user wishes to continue with the currency conversion, and choose another currency to convert to, the user selects the option "converted to [DKK]:" 225, which becomes highlighted upon selection, and is shown in page 230. The following reference numbers refers to Figure 3c: 235-270. In the next page 235, a selection list of available currencies are displayed. The user selects e.g. *USD* 240, and selects the entry by selecting "Ok" 245. The next page 250 highlights the selected currency USD 255 to convert to. Thereafter, the user may select "Options" 260, which in this example once again activates the calculation of the currency conversion and the result "[USD]: 36,36" 265 is displayed with the selected information in the next layout 270.

Figure 10 is an alternative service, but the same handset can be used as in the embodiment of Figure 9. The first four display pages are the same as for the currency converter and will thus not be described further. When the fifth display page 135 is presented to the user he selects the White Pages option. The White Pages application provides a tool to search contact information on a specific person. Once selected, an access request is sent to the server, as indicated on the display page 155. The handset's processor interprets the incoming WML to provide a static instance 911 on the following display page 910. When selected this static instance links to an edit page 920. The user enters the search string, in this case Peter, and the main White Pages display page 930 is returned to, which indicates the search string. Upon instruction, an access request is sent to the server and a corresponding display page 940 is presented on the display. The search results are received by the handset and listed. The user browses to the last item on page 950 and selects it (e.g. by rolling a roller key and then pressing it down to select it). Details of the person are displayed (pages 960 and 970). Details from these pages can be used in call handling as if they were stored in a conventional handset's phonebook (e.g. save, add to name, send message, call).

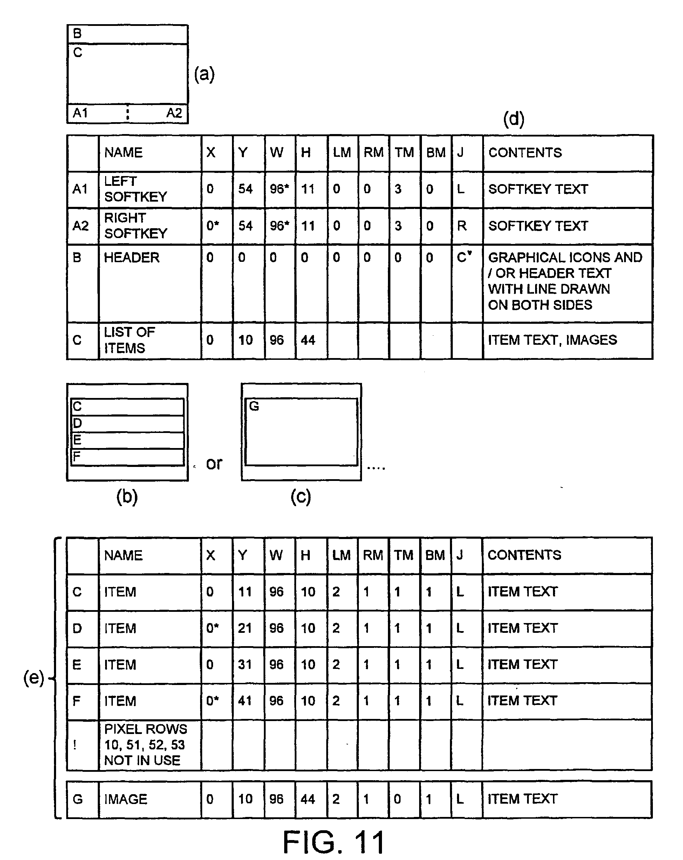

Figure 11 illustrates a multipurpose browser display according to a preferred embodiment of the invention. A multipurpose browser display is a term for a user interface of a WML casrd. It can contain hotlinks, input elements, selection list items, static text areas and images.

The display has been split into fields, so that information of a certain type will appear in a particular field. For example, information tagged as a header will appear in the field referenced B, and functions relating to the softkeys will appear in respective fields A1 and A2. The table (d) of Figure 11 defines the size and position of the fields on the display. This information is preferably stored in the handset and accessed by the processor when controlling operation of the display. The column headers refer to the following:

| | |
|---|---|
| left column | a letter which connects a window on the display picture and a row in the property table |
| Name | name of the window |
| X | horizontal co-ordinate of the left top corner pixel |
| Y | vertical co-ordinate of the left top corner pixel |
| W | horizontal width of the window in pixel amount |
| H | vertical height of the window in pixel amount |
| LM | left margin in pixel amount (0 = no marginal) |
| RM | right margin in pixel amount (0 = no marginal) |
| TM | top margin in pixel amount (0 = no marginal) |
| BM | bottom margin in pixel amount (0 = no marginal) |
| J | justification in the window (R=Right, L=Left, C=Centered) |
| Contents | information of the contents of the window |

There may be several different combinations of sub-divisions. Two such examples are shown in Figure 11 (b) and (c). Figure 11(b) is a useful arrangement for static instance lists and selection lists, and Figure 11 (c) is useful for editing (e.g. input elements) and also for images.

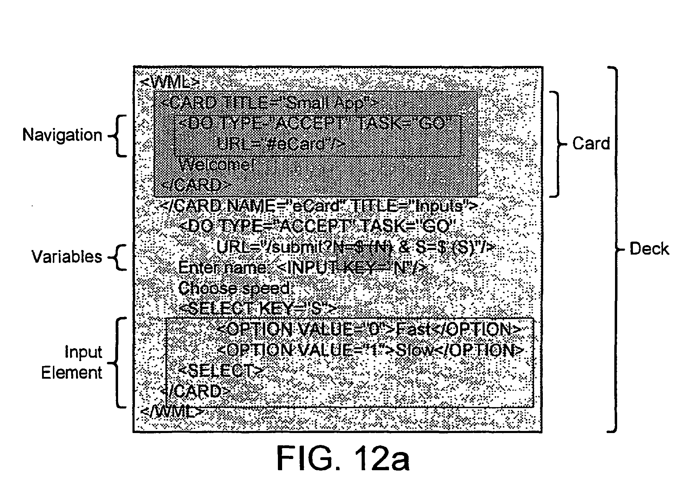

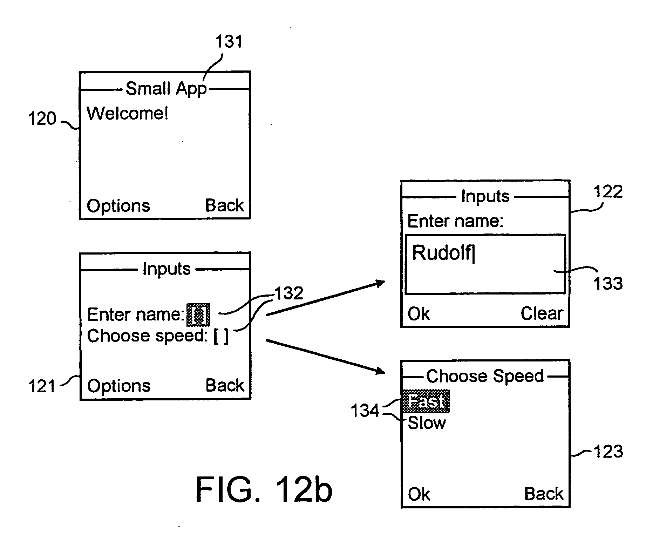

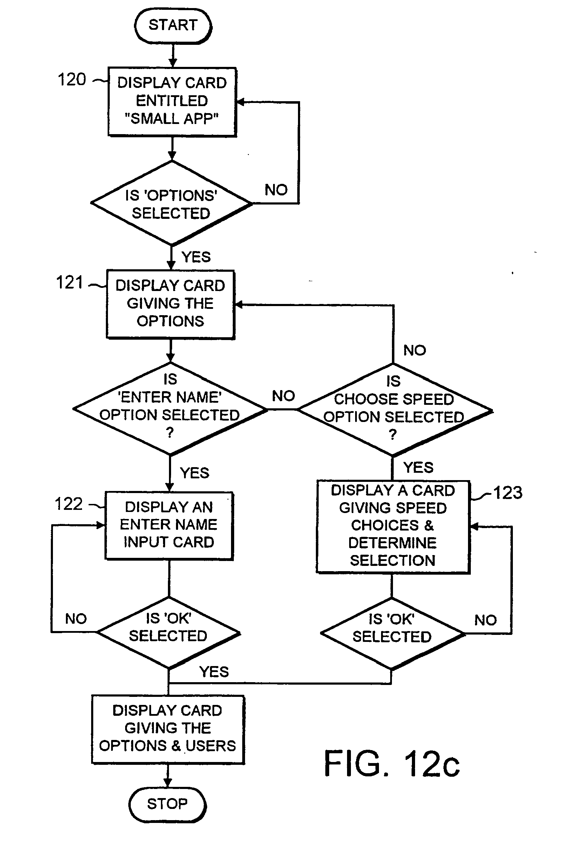

These fields have been used in the Figure 12 embodiment, which will now be described. Figure 12 illustrates some incoming WML, the resultant user interface according to the invention, and how a handset interpreted the WML to arrive at the desired user interface.

The WML defines a deck of two cards. The first card has the title "Small App" and displays the static text "Welcome!" That card also defines a function that upon an "accept signal", another card should be gone to, in this case the card named "eCard". The eCard has a title "Inputs" and has both an input function (Enter name) and a selection function (Choose speed - fast or slow). This information is transmitted to all handsets on a network. However, how that information is presented to a user is dependent upon the user agent (e.g. browser) of the handset, which interprets the WML. In accordance with the present invention, the static and reactive items are separated and linked by [ ].

The display is set such that the items tagged as "titles" appear in the header field B of the display, the listed items each appear in the single line fields C, D, E F, and the user input field appears in the field identified as G in Figure 11(c). The first card is displayed on a first page, as referenced 120 in Figure 12b. This page contains the title Small Apps 131 appearing in the header field, and the static text Welcome! It also contains the functions of the softkeys, options and back.

The processor is arranged to move to the next card in response to the actuation of the option softkey. However, rather than display all the content of the next card in a continuous string, the processor controls the display to present page 121 which bears only static instances 132 corresponding to the two functions enter name and choose speed. These link to further display pages 122 and 123 respectively which enable the name to be input and speed chosen. Since the whole of the second WML card is unlikely to fit on a single display page, the interpretation given by the browser in this embodiment avoids the need for scrolling, and provides a clearer overall picture of the information required.

Figure 12 (c) is a flow chart showing the interpretation of the WML to arrive at the display pages shown in Figure 12 (b) and how navigation through the pages takes place.

The present invention includes any novel feature or combination of features disclosed herein either explicitly or any generalisation thereof irrespective of whether or not it relates to the claimed invention or mitigates any or all of the problems addressed.

In view of the foregoing description it will be evident to a person skilled in the art that various modifications may be made within the scope of the invention. For xample, in stead of highlighting options, they could be marked, for example, with a cross.

## Claims

1. A radio handset (1) comprising:
a user interface including an input means (1), a display means (3), and a selection means (10) coupled to the input means (1) for selecting an item from a plurality of items which are presented on the display means (3), said items comprising at least static items (581) not allowing user's input of content therein and reactive items (582,583) allowing user's input of content therein, wherein at least a static item (581) is associated to a reactive item (582, 583); and
a radio receiver (19) adapted to receive information specifying a set of static items (581) and their associated reactive items (582,583), said information further indicating that said static items (581) and said associated reactive items (582,583) are to be displayed simultaneously;
said radio handset **characterised in that** it further comprises:
reformatting means coupled to the radio receiver (19) and adapted to extract the specified set of static items (581) and associated reactive items (582,583) from said received information, said reformatting means further adapted to generate a set of link items (585) from the extracted set of static items (581) and associated reactive items (582,583), each link item (585) defining a link between a static item (581) and its associated reactive item (582, 583);
control means (18) coupled to the selection means (10) and to the reformatting means for controlling operation of the display means (3), said control means (18) adapted to provide a simultaneous displaying of the static items (581) together with their corresponding link items (585) but without their associated reactive items (582,583), and also to detect that one of said link items (585) has been selected by the selection means (10); and further to replace the current displaying by a different one presenting the reactive item (582,583) associated to said selected link item (585).

2. A radio handset as claimed in claim 1, wherein the reactive items (582,583) include an input element.

3. A radio handset as claimed in claim 1 or 2, wherein the reactive items (582, 583) include a selection list.

4. A radio handset as claimed in any preceding claim which is a WAP handset.

5. A method of controlling the displaying of a radio handset (1) which comprises a user interface including an input means (2), a display means (3), and selection means (10) coupled to the input means (2) for selecting an item from a plurality of items which are presented on the display means (3), said items comprising at least static items (581) not allowing user's input of content therein and reactive items (582,583) allowing user's input of content therein, wherein at least a static item (581) is associated to a reactive item (582,583); and
said method comprising the step of:
a) receiving information specifying at least a set of static items (581) and their associated reactive items (582,583), said information further indicating that said static items (581) and said associated reactive items (582,583) are to be displayed simultaneously; and
said method **characterised in** the following steps:
b) extracting the specified set of static items (581) and associated reactive items (582,583) from said received information; and
c) generating a set of link items (585) from the extracted set of static items (581) and associated reactive items (582,583), each link item (585) defining a link between a static item (581) and its associated reactive item (582,583); and
d) simultaneously displaying said static items (581) together with their corresponding link items (585) but without their associated reactive items (582,583); and
e) detecting that one of said link items (585) has been selected by the selection means (10); and
f) replacing the current display by a different one presenting the reactive item (582,583) associated to said selected link item (585).

## Patentansprüche

1. Funk-Handapparat (1) umfassend:
- eine Benutzerschnittstelle, die ein Eingabemittel (1), ein Anzeigemittel (3) und ein Auswahlmittel (10) enthält, welches mit dem Eingabemittel (1) verbunden ist, um ein Objekt aus mehreren Objekten auszuwählen, die auf dem Anzeigemittel (3) dargestellt werden, wobei die Objekte mindestens statische Objekte (581), die keine Inhaltseingabe des Benutzers darin ermöglichen, und reaktive Objekte (582, 583) umfassen, die eine Inhaltseingabe des Benutzers darin ermöglichen, wobei mindestens ein statisches Objekt (581) mit einem reaktiven Objekt (582, 583) verknüpft ist; und
- einen Funkempfänger (19), der eingerichtet ist, Informationen zu empfangen, die einen Satz von statischen Objekten (581) und ihren verknüpften reaktiven Objekten (582, 583) spezifizieren, wobei die Informationen weiter angeben, dass die statischen Objekte (581) und die verknüpften reaktiven Objekte (582, 583) gleichzeitig angezeigt werden sollen;
wobei der Funk-Handapparat **dadurch gekennzeichnet, dass** er weiter umfasst:
- Reformatierungsmittel, die mit dem Funkempfänger (19) gekoppelt sind und die eingerichtet sind, den spezifizierten Satz an statischen Objekten (581) und verknüpften reaktiven Objekten (582, 583) aus den empfangenen Informationen zu extrahieren, wobei die Reformatierungsmittel weiter eingerichtet sind, einen Satz an Verbindungsobjekten (585) aus dem extrahierten Satz an statischen Objekten (581) und verknüpften reaktiven Objekten (582, 583) zu erzeugen, wobei jedes Verbindungsobjekt (585) eine Verbindung zwischen einem statischen Objekt (581) und seinem verknüpftem reaktiven Objekt (582, 583) definiert;
- Steuermittel (18), die mit dem Auswahlmittel (10) und den Reformatierungsmitteln gekoppelt sind, um den Betrieb des Anzeigemittels (3) zu steuern, wobei die Steuermittel (18) eingerichtet sind, gleichzeitiges Anzeigen der statischen Objekte (581) zusammen mit ihren entsprechenden Verbindungsobjekten (585), aber ohne ihre verknüpften reaktiven Objekte (582, 583), bereitzustellen und auch zu erfassen, dass einer der Verbindungsobjekte (585) von den Auswahlmitteln (10) ausgewählt worden ist; und weiter das momentane Anzeigen durch ein anderes zu ersetzen, das das reaktive Objekt (582, 583), das mit dem ausgewählten Verbindungsobjekt (585) verknüpft ist, darstellt.

2. Funk-Handapparat nach Anspruch 1, wobei die reaktiven Objekte (582, 583) ein Eingabeelement einschließen.

3. Funk-Handapparat nach Anspruch 1 oder 2, wobei die reaktiven Objekte (582, 583) eine Auswahlliste einschließen.

4. Funk-Handapparat nach einem vorhergehenden Anspruch, der ein WAP-Handapparat ist.

5. Verfahren zum Steuern des Anzeigens eines Funk-Handapparats (1), der eine Benutzerschnittstelle umfasst, die ein Eingabemittel (2), ein Anzeigemittel (3) und Auswahlmittel (10) einschließt, verbunden mit dem Eingabemittel (2), um ein Objekt aus mehreren Objekten auszuwählen, die auf dem Anzeigemittel (3) dargestellt werden, wobei die Objekte mindestens statische Objekte (581), die keine Inhaltseingabe des Benutzers darin ermöglichen und reaktive Objekte (582, 583) umfassen, die eine Inhaltseingabe des Benutzers darin ermöglichen, wobei mindestens ein statisches Objekt (581) mit einem reaktive Objekt (582, 583) verknüpft ist; und
das Verfahren die Schritte umfasst:
a. Empfangen von Informationen, die mindestens einen Satz von statischen Objekten (581) und ihren verknüpften reaktiven Objekten (582, 583) spezifizieren, wobei die Informationen weiter angeben, dass die statischen Objekte (581) und die verknüpften reaktiven Objekte (582, 583) gleichzeitig angezeigt werden sollen;
wobei das Verfahren durch folgende Schritte **gekennzeichnet** ist:
b. Extrahieren des spezifizierten Satzes an statischen Objekten (581) und verknüpften reaktiven Objekten (582, 583) aus den empfangenen Informationen; und
c. Erzeugen eines Satzes an Verbindungsobjekten (585) aus dem extrahierten Satz an statischen Objekten (581) und verknüpften reaktiven Objekte (582, 583), wobei jedes Verbindungsobjekt (585) eine Verbindung zwischen einem statischen Objekt (581) und seinem verknüpften reaktiven Objekt (582, 583) definiert; und
d. gleichzeitiges Anzeigen der statischen Objekte (581) zusammen mit ihrem entsprechenden Verbindungsobjekten (585), aber ohne ihre verknüpften reaktiven Objekten (582,583); und
e. Erfassen, dass einer der Verbindungsobjekte (585) von den Auswahlmitteln (10) ausgewählt worden ist; und
f. Ersetzen der momentanen Anzeige durch eine andere, die das reaktive Objekt (582, 583), das mit dem ausgewählten Verbindungsobjekt (585) verknüpft ist, darstellt.

## Revendications

1. Combiné radio (1) comportant :
une interface utilisateur comportant un moyen d'entrée (1), un moyen d'affichage (3) et un moyen de sélection (10) couplé au moyen d'entrée (1) en vue de sélectionner un élément à partir d'une pluralité d'éléments qui sont présentés sur le moyen d'affichage (3), lesdits éléments comportant au moins des éléments statiques (581) n'autorisant pas une entrée de contenu à l'utilisateur et des éléments réactifs (582, 583) autorisant une entrée de contenu à l'utilisateur, dans lequel au moins un élément statique (581) est associé à un élément réactif (582, 583) et
un récepteur radio (19) adapté pour recevoir des informations spécifiant un ensemble d'éléments statiques (581) et leurs éléments réactifs associés (582, 583), lesdites informations indiquant en outre que lesdits éléments statiques (581) et lesdits éléments réactifs associés (582, 583) doivent être affichés simultanément ;
ledit combiné radio étant **caractérisé en ce qu'**il comporte en outre :
des moyens de reformatage couplés au récepteur radio (19) et adaptés pour extraire l'ensemble spécifié d'éléments statiques (581) et les éléments réactifs associés (582, 583) à partir desdites informations reçues, lesdits moyens de reformatage étant en outre adaptés pour générer un ensemble d'éléments de lien (585) à partir de l'ensemble extrait d'éléments statiques (581) et éléments réactifs associés (582, 583), chaque élément de lien (585) définissant un lien entre un élément statique (581) et son élément réactif associé (582, 583) ;
des moyens de commande (18) couplés au moyen de sélection (10) et aux moyens de reformatage en vue de commander l'opération du moyen d'affichage (3), ledit moyen de commande (18) étant adapté pour fournir un affichage simultané des éléments statiques (581) avec leur éléments de lien correspondants (585) mais sans leur éléments réactifs associés (582, 583), et également pour détecter que l'un desdits éléments de lien (585) a été sélectionné par le moyen de sélection (10) ; et en outre pour remplacer l'affichage en cours par un affichage différent présentant l'élément réactif (582, 583) associé audit élément de lien sélectionné (585).

2. Combiné radio selon la revendication 1, dans lequel les éléments réactifs (582, 583) comportent un élément d'entrée.

3. Combiné radio selon la revendication 1 ou 2, dans lequel les éléments réactifs (582, 583) comportent une liste de sélection.

4. Combiné radio selon l'une quelconque des revendications précédentes qui est un combiné WAP.

5. Procédé de commande de l'affichage d'un combiné radio (1) qui comporte une interface utilisateur comportant un moyen d'entrée (2), un moyen d'affichage (3) et un moyen de sélection (10) couplé au moyen d'entrée (2) en vue de sélectionner un élément à partir d'une pluralité d'éléments qui sont présentés sur le moyen d'affichage (3), lesdits éléments comportant au moins des éléments statiques (581) n'autorisant pas une entrée de contenu à l'utilisateur et des éléments réactifs (582, 583) autorisant une entrée de contenu à l'utilisateur, dans lequel au moins un élément statique (581) est associé à un élément réactif (582, 583),
ledit procédé comportant l'étape consistant à :
a) recevoir des informations spécifiant au moins un ensemble d'éléments statiques (581) et leurs éléments réactifs associés (582, 583), lesdites informations indiquant en outre que lesdits éléments statiques (581) et lesdits éléments réactifs associés (582, 583) doivent être affichés simultanément ; et
ledit procédé étant **caractérisé par** les étapes suivantes consistant à :
b) extraire l'ensemble spécifié d'éléments statiques (581) et les éléments réactifs associés (582, 583) à partir desdites informations reçues ; et
c) générer un ensemble d'éléments de lien (585) à partir de l'ensemble extrait d'éléments statiques (581) et éléments réactifs associés (582, 583), chaque élément de lien (585) définissant un lien entre un élément statique (581) et son élément réactif associé (582, 583) ; et
d) afficher simultanément lesdits éléments statiques (581) avec leur éléments de lien correspondants (585) mais sans leurs éléments réactifs associés (582, 583) ; et
e) détecter que l'un desdits éléments de lien (585) a été sélectionné par le moyen de sélection (10) ; et
h) remplacer l'affichage en cours par un affichage différent présentant l'élément réactif (582, 583) associé audit élément de lien sélectionné (585).
